(19) Europäisches Patentamt / European Patent Office / Office européen des brevets

(11) **EP 2 414 054 B1**

(12) **FASCICULE DE BREVET EUROPEEN**

(45) Date de publication et mention
de la délivrance du brevet:
**16.10.2013 Bulletin 2013/42**

(21) Numéro de dépôt: **10718092.9**

(22) Date de dépôt: **29.03.2010**

(51) Int Cl.:
***A63B 69/12*** *(2006.01)*      ***A63B 71/06*** *(2006.01)*

(86) Numéro de dépôt international:
**PCT/EP2010/054133**

(87) Numéro de publication internationale:
**WO 2010/112470 (07.10.2010 Gazette 2010/40)**

(54) **SYSTEME ET PROCEDE D' OBSERVATION D'UNE ACTIVITE DE NAGE D'UNE PERSONNE**

SYSTEM UND VERFAHREN ZUR BEOBACHTUNG DER SCHWIMMAKTIVITÄT EINER PERSON

SYSTEM AND METHOD FOR OBSERVING THE SWIMMING ACTIVITY OF A PERSON

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **31.03.2009 FR 0952017**

(43) Date de publication de la demande:
**08.02.2012 Bulletin 2012/06**

(73) Titulaires:
• **Movea**
**38000 Grenoble (FR)**
• **Commissariat à l'Énergie Atomique
et aux Énergies Alternatives
75015 Paris (FR)**

(72) Inventeur: **JALLON, Pierre**
**F-38100 Grenoble (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**WO-A1-2008/032315      US-A- 4 654 010**
**US-A- 5 663 897**

**Description**

La présente invention porte sur un système et un procédé d'observation d'une activité de nage d'une personne.

Il existe des systèmes pour calculer la distance nagée à partir de mesures transmises par un capteur de mouvement lié au nageur, tel que celui divulgué dans le document WO 2004/038336 (Clothing Plus OY) et USA-4654010.

Toutefois de tels systèmes effectuent uniquement une observation ou un suivi quantitatif de l'activité de nage d'une personne, en aucun cas une analyse qualitative des types de nage pratiqués.

La présente invention vise à permettre une analyse d'une activité de nage d'une personne, permettant de différencier les types de nages effectués au cours du temps, ce qui peut être particulièrement utile à un nageur soucieux de surveiller ses progrès et son entraînement, par exemple en vue de compétitions.

Aussi, il est proposé, selon un aspect de l'invention, un système d'observation d'une activité de nage d'une personne, comprenant un boîtier étanche comprenant un capteur de mouvement, et muni de moyens de fixation pour lier solidairement le boîtier à une partie du corps d'un utilisateur. Le système comprend des moyens d'analyse des signaux transmis par le capteur de mouvement à au moins un axe de mesure adaptés pour déterminer le type de nage de l'utilisateur en fonction du temps en utilisant un modèle de Markov caché à N états correspondant respectivement à N types de nages.

Il est ainsi possible, d'analyser, au cours du temps, les différents types de nage pratiqués par l'utilisateur du système. Ce dernier, ou une autre personne peut ainsi observer les évolutions et progrès du nageur, et faire des statistiques comparatives entre différentes séances de nage, ou au sein d'une même séance.

Dans un mode de réalisation, ledit capteur de mouvement comprend un accéléromètre ou un gyromètre ou un magnétomètre.

Selon un mode de réalisation, le système comprend, en outre, un filtre passe-bas de fréquence de coupure comprise entre 0.5 Hz et 5 Hz.

Dans un mode de réalisation, lesdits moyens de fixation sont adaptés pour lier solidairement le boîtier au poignet, à la cheville, au cou ou à la tête de l'utilisateur.

Ainsi le système peut limiter les bruits générés par les chocs mesurés tels les chocs mesurés lorsque la main portant le boîtier étanche entre dans l'eau.

Dans un mode de réalisation, la densité de probabilité $p_X(\underline{x}(n))$ de correspondance entre les signaux délivrés par le capteur de mouvement et un état du modèle de Markov caché représentant un type de nage est définie par l'expression suivante :

$$\frac{1}{\sqrt{2\pi|\Sigma|}} \cdot e^{\frac{(\underline{x}(n)-\underline{\mu})^T \Sigma^{-1}(\underline{x}(n)-\underline{\mu})}{2}}$$

dans laquelle :

$\underline{x}(n)$ représente le vecteur colonne de composantes les mesures axiales du capteur de mouvement à l'échantillon d'indice n ;

$\underline{\mu}$ représente un vecteur colonne au nombre de composantes le nombre d'axes de mesure du capteur de mouvement, représentatif de l'état du modèle de Markov caché correspondant à ladite nage ; et

$|\Sigma|$ représente la valeur absolue du déterminant d'une matrice diagonale $\Sigma$ de dimension le nombre d'axes de mesure du capteur de mouvement représentative de l'état du modèle de Markov caché correspondant à ladite nage.

L'utilisation d'un tel modèle de Markov caché, permet de distinguer précisément le type de nage pratiqué.

Selon un mode de réalisation, les moyens d'analyse sont adaptés pour déterminer le type de nage de l'utilisateur parmi un ensemble d'au moins deux nages parmi la brasse, le crawl, le papillon, et le dos crawlé.

Ainsi, l'invention permet de distinguer toute nage parmi ces nages classiques.

Par exemple, ledit capteur de mouvement comprenant un accéléromètre triaxial et le boîtier étanche étant lié solidairement au poignet de l'utilisateur, les trois axes dudit accéléromètre, formant un trièdre orienté direct, sont tels que :

- le premier axe a pour direction l'axe longitudinal de l'avant bras du poignet auquel est lié le boîtier et est orienté vers le coude ; et

- le troisième axe est vertical orienté vers le bas, lorsque l'avant-bras du poignet auquel est lié le boîtier est dans un plan horizontal, la paume de la main du poignet auquel est lié le boîtier étant dirigée vers le bas, et ledit boîtier étant disposé sur la face externe du poignet.

Dans un mode de réalisation, pour la brasse, les trois composantes $\mu_1$, $\mu_2$, $\mu_3$ du vecteur colonne $\underline{\mu}$ sont telles que $\mu_1 \in$ [- 0.45;- 0.20], $\mu_2$, $\in$ [- 0.1; 0.5], et $\mu_3 \in$ [- 0.8; 0.45], et les trois composantes diagonales $\Sigma_1$, $\Sigma_2$, $\Sigma_3$ de la matrice diagonale $\Sigma$ sont telles que $\Sigma_1 \in$ [0.1, 0.18], $\Sigma_2 \in$ [0.2; 0.6], et $\Sigma_3 \in$ [0.03; 0.2] .

Selon un mode de réalisation, pour le crawl, les trois composantes $\mu_1$, $\mu_2$, $\mu_3$ du vecteur colonne $\underline{\mu}$ sont telles que $\mu_1 \in$ [- 0.7;- 0.8], $\mu_2 \in$ [- 0.25;- 0.45], et $\mu_3 \in$ [- 0.4; 0.2], et les trois composantes diagonales $\Sigma_1$, $\Sigma_2$, $\Sigma_3$ de la matrice diagonale $\Sigma$ sont telles que $\Sigma_1 \in$ [0.2; 0.3], $\Sigma_2 \in$ [0.1; 0.3], et $\Sigma_2 \in$ [0.07; 0.5] .

Dans un mode de réalisation, pour le papillon, les trois composantes $\mu_1$, $\mu_2$, $\mu_3$ du vecteur colonne $\underline{\mu}$ sont telles que $\mu_1 \in$ [- 0.8; 0.1], $\mu_2 \in$ [- 0.45; 0.5], et $\mu_3 \in$ [- 0.2; 0.4], et les trois composantes diagonales $\Sigma_1$, $\Sigma_2$, $\Sigma_3$ de la matrice diagonale $\Sigma$ sont telles que $\Sigma_1 \in$ [0.2; 0.4], $\Sigma_2 \in$ [0.1; 0.5], et $\Sigma_3 \in$ [0.2; 0.8] .

Selon un mode de réalisation, pour le dos crawlé, les trois composantes $\mu_1$, $\mu_2$, $\mu_3$ du vecteur colonne $\underline{\mu}$ sont telles que $\mu_1 \in$ [- 0.2; 0.1], $\mu_2 \in$ [0.3; 0.7], et $\mu_3 \in$ [- 0.05; 0.4], et les trois composantes diagonales $\Sigma_1$, $\Sigma_2$, $\Sigma_3$ de la matrice diagonale $\Sigma$ sont telles que $\Sigma_1 \in$ [0.2; 0.4], $\Sigma_2 \in$ [0.1; 0.5], et $\Sigma_2 \in$ [0.2; 0.8] . Dans un mode de réalisation, les probabilités P, dudit modèle de Markov caché, de passage entre deux états représentant respectivement un type de nage sont telles que :

$P (état_i, état_j) \in$ [0.8; 0.9999], lorsque i est différent de j; et
$P (état_i, état_j) \in$ [0.0001; 0.2], lorsque i est égal à j

Ainsi, la précision du système est améliorée.

Selon un mode de réalisation, lesdits moyens d'analyse sont internes ou externes au boîtier, et l'accéléromètre triaxial comprend des moyens de transmission avec ou sans fil pour transmettre ses mesures auxdits moyens d'analyse.

Ainsi, de nombreux modes de réalisation peuvent être envisagés.

Dans un mode de réalisation, le système comprend des moyens d'affichage fixés au boîtier et/ou des moyens d'affichages distants.

Ainsi, les résultats d'analyse de l'activité de nage de l'utilisateur peuvent être visualisés par le nageur directement, ou bien analysés et visualisés sur un plus grand écran externe, par exemple d'un ordinateur portable qui peut comprendre les moyens d'analyse.

Selon un autre aspect de l'invention, il est également proposé un procédé d'observation d'une activité de nage d'une personne, à partir de mesures transmises par par capteur de mouvement fixé de manière étanche à une partie du corps de l'utilisateur, caractérisé en ce que l'on analyse les signaux transmis par le capteur de mouvement à au moins un axe de mesure pour déterminer le type de nage de l'utilisateur en fonction du temps en utilisant un modèle de Markov caché à N états correspondant respectivement à N types nages.

L'invention sera mieux comprise à l'étude de quelques modes de réalisation décrits à titre d'exemples nullement limitatifs et illustrés par les dessins annexés sur lesquels :

- les figures 1 et 2 illustrent deux modes de réalisation de systèmes selon un aspect de l'invention ; et
- les figures 3 et 4 illustrent deux exemples de résultat d'un système selon un aspect de l'invention.

Dans l'ensemble de figures, les éléments ayants les mêmes références sont similaires. Dans les exemples qui suivent, le capteur de mouvement comprend un accéléromètre triaxial, mais l'invention s'applique à un capteur de mouvement comprenant un gyromètre ou un magnétomètre.

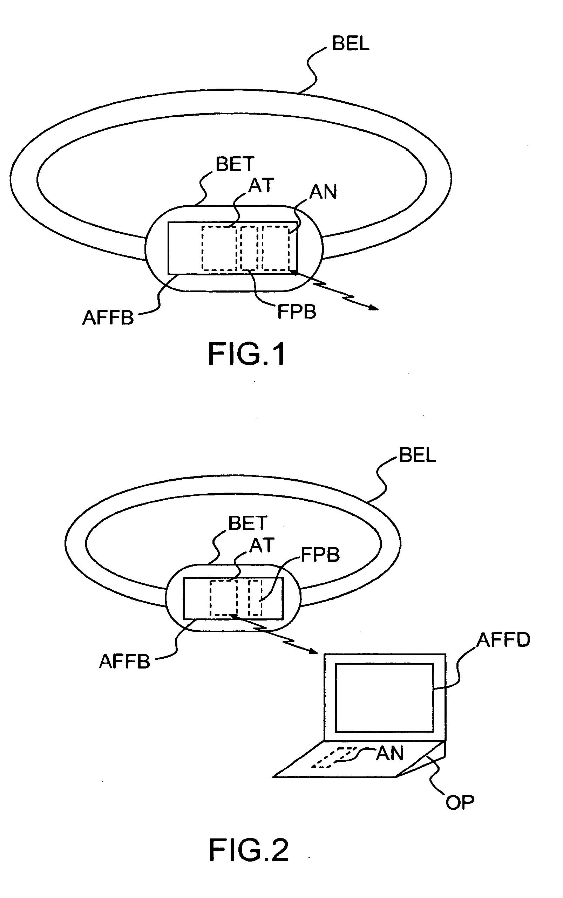

Tel qu'illustré sur la figure 1, le système d'observation d'une activité de nage d'une personne comprend un boîtier étanche BET comprenant un accéléromètre triaxial AT. Le système comprend des moyens de fixation pour lier solidairement le boîtier à une partie du corps d'un utilisateur, en particulier au poignet, à la cheville, au cou ou à la tête d'un utilisateur, en l'occurrence au moyen d'un bracelet élastique BEL.

Le système comprend un module d'analyse AN des signaux transmis par l'accéléromètre triaxial AT adaptés pour déterminer le type de nage de l'utilisateur en fonction du temps en utilisant un modèle de Markov caché à N états correspondant respectivement à N types de nages.

Le système comprend également un filtre passe-bas FPB optionnel, de fréquence de coupure comprise entre 0.5Hz et 5Hz, permettant de limiter les bruits générés par les chocs mesurés, notamment lorsque la main, portant le boîtier étanche entre dans l'eau.

Un écran d'affichage optionnel AFFB fixé au boîtier BET, peut permettre à l'utilisateur du système de visualiser les résultats d'une manière appropriée à la taille réduite de l'écran. Le module d'analyse AN peut également transférer, en temps réel ou en différé, par une liaison filaire ou sans fil, les résultats à afficher à un ordinateur comprenant un écran de taille bien supérieure, permettant une visualisation améliorée des résultats. Bien entendu, le module d'analyse comprend une mémoire pour mémoriser les résultats, notamment afin de pouvoir les transmettre en différé si nécessaire.

En variante, tel qu'illustré sur la figure 2, le module d'analyse AN est extérieur au boîtier étanche BET, il est par exemple embarqué sur un ordinateur portable OP.

Dans la suite de la description, l'exemple nullement limitatif traité, est un système selon un aspect de l'invention, dans lequel le module d'analyse AN est adapté pour déterminer le type de nage de l'utilisateur en fonction du temps en utilisant un modèle de Markov caché à 3 états (N=3) correspondant respectivement à la brasse (état 1), le crawl (état 2) et le dos crawlé (état 3).

Dans cet exemple, les trois signaux émis par l'accéléromètre triaxial AT, correspondant respectivement aux accélérations mesurée sur chacun des trois axes de mesure, sont acquis à une fréquence de 200 Hz, puis découpés en intervalles de temps successifs de 0,5 s sur lesquels une moyenne est calculée. Ainsi on obtient un signal échantillonné à 2 Hz en entrée du module d'analyse AN.

Ces signaux sont notés sous forme d'un vecteur à trois dimensions : $\underline{x}(n) = [x_1(n), x_2(n), x_3(n)]^T$, dans lequel n représente l'indice de l'échantillon à la fréquence de 2 Hz, et $x_1$, $x_2$, et $x_3$ représentent les valeurs des signaux correspondant aux trois axes de mesure.

La densité de probabilité $P_x$ du vecteur $\underline{x}(n)$ est approximée par une loi Gaussienne de dimension 3, dont les paramètres dépendent du type de nage considéré :

$$P_x\left(\underline{x}(n)\right) = \frac{1}{\sqrt{2\pi|\Sigma|}} \cdot e^{\frac{\left(\underline{x}(n)-\underline{\mu}\right)^T \Sigma^{-1}\left(\underline{x}(n)-\underline{\mu}\right)}{2}}$$

dans laquelle :

> $\underline{x}(n)$ représente le vecteur colonne de composantes les trois mesures axiales de l'accéléromètre triaxial à l'échantillon d'indice n ;
>
> $\underline{\mu}$ représente un vecteur colonne à trois composantes, représentatif de l'état du modèle de Markov caché correspondant à ladite nage ; et
>
> $|\Sigma|$ représente la valeur absolue du déterminant d'une matrice diagonale $\Sigma$ de dimension 3 représentative de l'état du modèle de Markov caché correspondant à ladite nage.

Dans cet exemple, les trois axes de l'accéléromètre AT, forment un trièdre orienté direct, et sont tels que :

- le premier axe a pour direction l'axe longitudinal de l'avant bras du poignet auquel est lié le boîtier BET et est orienté vers le coude ; et
- le troisième axe est vertical orienté vers le bas, lorsque l'avant-bras du poignet auquel est lié le boîtier BET est dans un plan horizontal, la paume de la main du poignet auquel est lié le boîtier BET étant dirigée vers le bas, et ledit boîtier BET étant disposé sur la face externe du poignet.

Les trois nages de l'exemple considéré sont définies avec les paramètres suivants :

- la brasse (état 1 du modèle de Markov caché) :

$$\underline{\mu} = \left[-0.3; 0; -0.70\right]^T \text{ et } \Sigma = \begin{bmatrix} 0.05 & 0 & 0 \\ 0 & 0.30 & 0 \\ 0 & 0 & 0.10 \end{bmatrix}$$

- le crawl (état 2 du modèle de Markov caché) :

$$\underline{\mu} = \left[-0.765; -0335; -0.4595\right]^T \text{ et } \Sigma = \begin{bmatrix} 0.20 & 0 & 0 \\ 0 & 0.15 & 0 \\ 0 & 0 & 0.10 \end{bmatrix}$$

- le dos crawlé (état 3 du modèle de Markov caché) :

$$\underline{\mu} = \begin{bmatrix} -0.10; \, 0.40; \, 0 \end{bmatrix}^{T} \quad \text{et} \quad \Sigma = \begin{bmatrix} 0.20 & 0 & 0 \\ 0 & 0.20 & 0 \\ 0 & 0 & 0.50 \end{bmatrix}$$

Les densités de probabilités de passage P(état$_i$ / état$_j$) d'un état état$_i$ correspondant à une nage du modèle de Markov caché à un autre état état$_j$ correspondant à une nage du modèle de Markov caché sont les suivantes, choisies de manière à assurer une bonne stabilité au système :

| P(état$_i$ / état$_j$) | état$_i$=1 (brasse) | état$_i$=2 (crawl) | état$_i$=3 (dos crawlé) |
|---|---|---|---|
| état$_j$=1 (brasse) | 0.999 | 0.0005 | 0.0005 |
| état$_j$=2 (crawl) | 0.0005 | 0.999 | 0.0005 |
| état$_j$=3 (dos crawlé) | 0.0005 | 0.0005 | 0.999 |

Le module d'analyse AN détermine, à partir des signaux d'entrée et du modèle de Markov caché tel que défini, la séquence d'états (nages) la plus probable, selon des procédés classiques, par exemple en calculant pour l'ensemble des séquences d'états possibles la probabilité associée compte tenu du signal observé et en gardant la séquence la plus probable, tels que décrits par exemple dans le document "An introduction to hidden Markov models" de L.R. Rabiner et B.H. Juang, IEEE ASSP Magazine, January 1986, ou dans le livre "Inference in Hidden Markov Models" de Cappé, Moulines et Ryden de Springer, de la série "Springer series in statisctics".

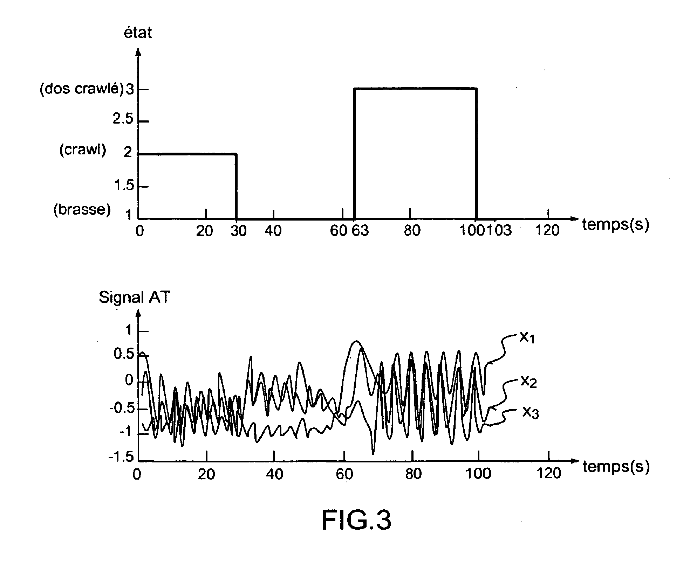

La figure 3 illustre un exemple d'enregistrement d'une séance de nage d'un utilisateur du système, sur le graphique inférieur, et le résultat fourni par le système qui indique que le nageur a nagé le crawl pendant 30 secondes, puis la brasse pendant 33 secondes, puis le dos crawlé pendant 37 secondes.

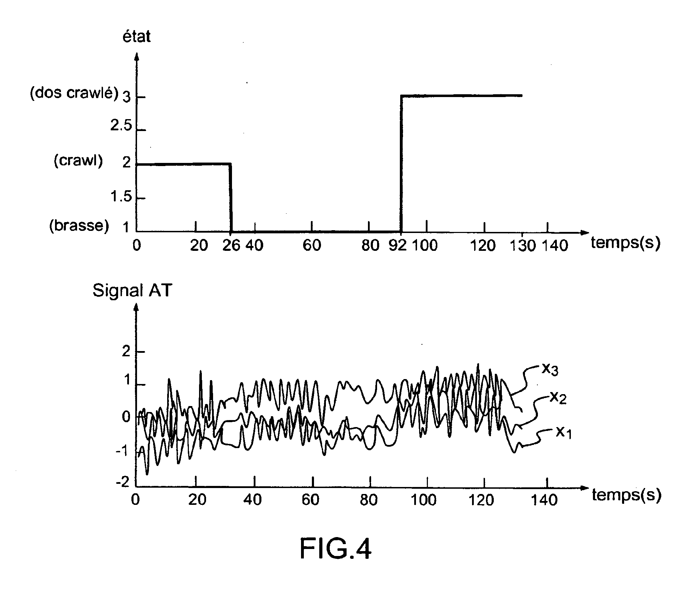

La figure 4 illustre un autre exemple d'enregistrement d'une séance de nage d'un utilisateur du système, sur le graphique inférieur, et le résultat fourni par le système qui indique que le nageur a nagé le crawl pendant 26 secondes, puis la brasse pendant 66 secondes, puis le dos crawlé pendant 38 secondes.

La présente invention permet, à coût réduit, de permettre à un nageur d'enregistrer et de suivre en temps réel ou en différé sa séance de  nage, en déterminant avec précision les enchaînements de nage qu'il a faits pendant sa séance.

## Revendications

1.  Système d'observation d'une activité de nage d'une personne, comprenant un boîtier étanche (BET) comprenant un capteur de mouvement (CM), et muni de moyens de fixation (BEL) pour lier solidairement le boîtier (BET) à une partie du corps d'un utilisateur, **caractérisé en ce qu'**il comprend des moyens d'analyse (AN) des signaux transmis par le capteur de mouvement (CM) à au moins un axe de mesure adaptés pour déterminer le type de nage de l'utilisateur en fonction du temps en utilisant un modèle de Markov caché à N états correspondant respectivement à N types de nages.

2.  Système selon la revendication 1, dans lequel ledit capteur de mouvement (CM) comprend un accéléromètre ou un gyromètre ou un magnétomètre.

3.  Système selon la revendication 1 ou 2, comprenant, en outre, un filtre passe-bas (FPB) de fréquence de coupure comprise entre 0.5 Hz et 5 Hz.

4.  Système selon l'une des revendications 1 à 3, dans lequel lesdits moyens de fixation (BEL) sont adaptés pour lier solidairement le boîtier (BET) au poignet, à la cheville, au cou ou à la tête de l'utilisateur.

5.  Système selon la revendication 3 ou 4, dans lequel la densité de probabilité $p_x(\underline{x}(n))$ de correspondance entre les signaux délivrés par le capteur de mouvement (CM) et un état du modèle de Markov caché représentant un type de nage est définie par l'expression suivante :

$$\frac{1}{\sqrt{2\pi|\Sigma|}} \cdot e^{\frac{\left(\underline{x}(n)-\underline{\mu}\right)^T \Sigma^{-1}\left(\underline{x}(n)-\underline{\mu}\right)}{2}}$$

dans laquelle :

$\underline{x}$(n) représente le vecteur colonne de composantes les mesures axiales du capteur de mouvement (CM) à l'échantillon d'indice n ;

$\underline{\mu}$ représente un vecteur colonne au nombre de composantes égale au nombre d'axes de mesure du capteur de mouvement (CM), représentatif de l'état du modèle de Markov caché correspondant à ladite nage ; et

$|\Sigma|$ représente la valeur absolue du déterminant d'une matrice diagonale $\Sigma$ de dimension le nombre d'axes de mesure du capteur de mouvement (CM) représentative de l'état du modèle de Markov caché correspondant à ladite nage.

6. Système selon l'une des revendications précédentes, dans lequel, dans lequel les moyens d'analyse (AN) sont adaptés pour déterminer le type de nage de l'utilisateur parmi un ensemble d'au moins deux nages parmi la brasse, le crawl, le papillon, et le dos crawlé.

7. Système selon l'une des revendications 1 à 6, dans lequel, ledit capteur de mouvement (CM) comprenant un accéléromètre triaxial (AT) et le boîtier étanche (BET) étant lié solidairement au poignet de l'utilisateur, les trois axes dudit accéléromètre (AT), formant un trièdre orienté direct, sont tels que :

- le premier axe a pour direction l'axe longitudinal de l'avant bras du poignet auquel est lié le boîtier (BET) et est orienté vers le coude ;et

- le troisième axe est vertical orienté vers le bas, lorsque l'avant-bras du poignet auquel est lié le boîtier (BET) est dans un plan horizontal, la paume de la main du poignet auquel est lié le boîtier (BET) étant dirigée vers le bas, et ledit boîtier (BET) étant disposé sur la face externe du poignet.

8. Système selon la revendication 7, dans lequel, pour la brasse, les trois composantes $\mu_1$, $\mu_2$, $\mu_3$ du vecteur colonne $\underline{\mu}$ sont telles que $\mu_1 \in$ [- 0.45;- 0.20], $\mu_2 \in$ [- 0.1; 0.5], et $\mu_3 \in$ [- 0.8; 0.45], et les trois composantes diagonales $\Sigma_1$, $\Sigma_2$, $\Sigma_3$ de la matrice diagonale $\Sigma$ sont telles que $\Sigma_1 \in$ [0.1, 0.18], $\Sigma_2 \in$ [0.2; 0.6], et $\Sigma_3 \in$ [0.03; 0.2] .

9. Système selon la revendication 7, dans lequel, pour le crawl, les trois composantes $\mu_1$, $\mu_2$, $\mu_3$ du vecteur colonne $\underline{\mu}$ sont telles que $\mu_1 \in$ [- 0.7;- 0.8], $\mu_2 \in$ [- 0.25;- 0.45], et $\mu_3 \in$ [- 0.4; 0.2], et les trois composantes diagonales $\Sigma_1$, $\Sigma_2$, $\Sigma_3$ de la matrice diagonale $\Sigma$ sont telles que $\Sigma_1 \in$ [0.2; 0.3], $\Sigma_2 \in$ [0.1; 0.3], et $\Sigma_3 \in$ [0.07, 0.5] .

10. Système selon la revendication 7, dans lequel, pour le papillon, les trois composantes $\mu_1$, $\mu_2$, $\mu_3$ du vecteur colonne $\underline{\mu}$ sont telles que $\mu_1 \in$ [- 0.8; 0.1], $\mu_2 \in$ [- 0.45; 0.5], et $\mu_3 \in$ [- 0.2; 0.4], et les trois composantes diagonales $\Sigma_1$, $\Sigma_2$, $\Sigma_3$ de la matrice diagonale $\Sigma$ sont telles que $\Sigma_1 \in$ [0.2; 0.4], $\Sigma_2 \in$ [0.1; 0.5], et $\Sigma_3 \in$ [0.2; 0.8] .

11. Système selon la revendication 7, dans lequel, pour le dos crawlé, les trois composantes $\mu_1$, $\mu_2$, $\mu_3$ du vecteur colonne $\underline{\mu}$ sont telles que $\mu_1 \in$ [- 0.2; 0.1], $\mu_2 \in$ [0.3; 0.7], et $\mu_3 \in$ [- 0.05; 0.4], et les trois composantes diagonales $\Sigma_1$, $\Sigma_2$, $\Sigma_3$ de la matrice diagonale $\Sigma$ sont telles que $\Sigma_1 \in$ [0.2; 0.4], $\Sigma_2 \in$ [0.1; 0.5], et $\Sigma_3 \in$ [0.2; 0.8] .

12. Système selon l'une des revendications 7 à 11, dans lequel les probabilités P, dudit modèle de Markov caché, de passage entre deux états représentant respectivement un type de nage sont telles que :

P (état$_i$, état$_j$) $\in$ [0.8; 0.9999], lorsque i est différent de j; et

P (état$_i$, état$_j$) $\in$ [0.0001; 0.2], lorsque i est égal à j.

13. Système selon l'une des revendications 7 à 12, dans lequel lesdits moyens d'analyse (AN) sont internes ou externes au boîtier (BET), et l'accéléromètre triaxial (AT) comprend des moyens de transmission avec ou sans fil pour transmettre ses mesures auxdits moyens d'analyse (AN).

14. Système selon l'une des revendications 7 à 13, comprenant, en outre, des moyens d'affichage (AFFB) fixés au boîtier et/ou des moyens d'affichages distants (AFFD).

**15.** Procédé d'observation d'une activité de nage d'une personne, à partir de mesures transmises par un par capteur de mouvement (CM) fixé de manière étanche à une partie du corps de l'utilisateur, **caractérisé en ce que** l'on analyse les signaux transmis par le capteur de mouvement (CM) à au moins un axe de mesure pour déterminer le type de nage de l'utilisateur en fonction du temps en utilisant un modèle de Markov caché à N états correspondant respectivement à N types nages.

## Patentansprüche

**1.** System zum Beobachten der Schwimmaktivität einer Person, das ein geschlossenes Gehäuse (BET) umfasst, das einen Bewegungssensor (CM) umfasst und mit Befestigungsmitteln (BEL) zum sicheren Anbringen des Gehäuses (BET) an einem Teil des Körpers eines Benutzers versehen ist, **dadurch gekennzeichnet, dass** es Mittel (AN) zum Analysieren von Signalen umfasst, die vom Bewegungssensor (CM) zu wenigstens einer Messachse übertragen werden, wobei die Mittel so ausgelegt sind, dass sie die Schwimmart eines Benutzers in Abhängigkeit von der Zeit anhand eines versteckten Markov-Modells mit N Zuständen bestimmen, die jeweils N Schwimmarten entsprechen.

**2.** System nach Anspruch 1, wobei der Bewegungssensor (CM) einen Beschleunigungsmesser oder ein Gyrometer oder ein Magnetometer umfasst.

**3.** System nach Anspruch 1 oder 2, das ferner ein Tiefpassfilter (FPB) mit einer Grenzfrequenz zwischen 0,5 Hz und 5 Hz umfasst.

**4.** System nach einem der Ansprüche 1 bis 3, wobei die Befestigungsmittel (BEL) zum sicheren Anbringen des Gehäuses (BET) am Armgelenk, am Fußgelenk, am Hals oder am Kopf des Benutzers ausgelegt sind.

**5.** System nach Anspruch 3 oder 4, wobei die Wahrscheinlichkeitsdichte $p_x(\underline{x}(n))$ der Korrespondenz zwischen den vom Bewegungssensor (CM) gelieferten Signalen und einem Zustand des versteckten Markov-Modells, der eine Schwimmart repräsentiert, durch den folgenden Ausdruck definiert wird:

$$\frac{1}{\sqrt{2\pi|\Sigma|}} \cdot e^{\frac{(\underline{x}(n)-\mu)^T \Sigma^{-1}(\underline{x}(n)-\mu)}{2}}$$

wobei:

$\underline{x}(n)$ den Spaltenvektor von Komponenten der axialen Messungen des Bewegungssensors (CM) an einem Sample von Index n repräsentiert;

$\underline{\mu}$ einen Spaltenvektor für die Zahl der Komponenten repräsentiert, die der Zahl der Messachsen des Bewegungssensors (CM) entspricht, und die den Zustand des verborgenen Markov-Modells repräsentieren, der der Schwimmart entspricht; und

$|\Sigma|$ den Absolutwert der Determinanten einer diagonalen Matrix $\Sigma$ mit einer Größe repräsentiert, die der Anzahl der Messachsen des Bewegungssensors (CM) entspricht, die den Zustand des verborgenen Markov-Modells repräsentieren, der der Schwimmart entspricht.

**6.** System nach einem der vorherigen Ansprüche, wobei die Analysemittel (AN) so ausgelegt sind, dass sie die Schwimmart des Benutzers aus einem Satz von wenigstens zwei Schwimmarten aus Brustschwimmen, Kraulschwimmen, Butterfly und Rückenschwimmen bestimmen.

**7.** System nach einem der Ansprüche 1 bis 6, wobei, da der Bewegungssensor (CM) einen dreiachsigen Beschleunigungsmesser (AT) umfasst und das abgedichtete Gehäuse (BET) fest am Armgelenk des Benutzers befestigt ist, die drei Achsen des Beschleunigungsmessers (AT) ein direkt orientiertes Trieder bilden, so dass:

- die Richtung der ersten Achse die Längsachse des Vorderarms des Armgelenks ist, an dem das Gehäuse (BET) angebracht ist, und in Richtung Ellbogen orientiert ist; und
- die dritte Achse vertikal nach unten orientiert ist, wenn der Vorderarm des Armgelenks, an dem das Gehäuse (BET) angebracht ist, in einer horizontalen Ebene ist, wobei die Handfläche des Handgelenks, an dem das Gehäuse (BET) angebracht ist, nach unten gerichtet ist, und wobei das Gehäuse (BET) auf der Außenfläche des Handgelenks angeordnet ist.

8. System nach Anspruch 7, wobei für Brustschwimmen die drei Komponenten $\mu_1$, $\mu_2$, $\mu_3$ des Spaltenvektors $\underline{\mu}$ derart sind, daß $\mu_1 \in [- 0, 45;- 0, 20]$, $\mu_2 \in [- 0, 1; 0, 5]$ und $\mu_3 \in [- 0, 8; 0, 45]$, und die drei diagonalen Komponenten $\Sigma_1$, $\Sigma_2$, $\Sigma_3$ der diagonalen Matrix $\Sigma$ derart sind, dass $\Sigma_1 \in [0, 1; 0, 18]$, $\Sigma_2 \in [0, 2; 0, 6]$ und $\Sigma_3 \in [0, 03; 0, 2]$ ist.

9. System nach Anspruch 7, wobei für Kraulschwimmen die drei Komponenten $\mu_1$, $\mu_2$, $\mu_3$ des Spaltenvektors $\underline{\mu}$ derart sind, dass $\mu_1 \in [- 0, 7;- 0, 8]$, $\mu_2 \in [- 0, 25;- 0, 45]$ und $\mu_3 \in [- 0, 4; 0, 2]$ ist, und die drei diagonalen Komponenten $\Sigma_1$, $\Sigma_2$, $\Sigma_3$ der diagonalen Matrix $\Sigma$ derart sind, dass $\Sigma_1 \in [0, 2; 0, 3]$, $\Sigma_2 \in [0, 1; 0, 3]$ und $\Sigma_3 \in [0, 07; 0, 5]$ ist.

10. System nach Anspruch 7, wobei für Butterfly die drei Komponenten $\mu_1$, $\mu_2$, $\mu_3$ des Spaltenvektors $\underline{\mu}$ derart sind, dass $\mu_1 \in [- 0, 8; 0, 1]$, $\mu_2 \in [- 0, 45; 0, 5]$ und $\mu_3 \in [- 0, 2; 0, 4]$ ist, und die drei diagonalen Komponenten $\Sigma_1$, $\Sigma_2$, $\Sigma_3$ der diagonalen Matrix $\Sigma$ derart sind, dass $\Sigma_1 \in [0, 2; 0, 4]$, $\Sigma_2 \in [0, 1; 0, 5]$ und $\Sigma_3 \in [0, 2; 0, 8]$ ist.

11. System nach Anspruch 7, wobei für Rückenschwimmen die drei Komponenten $\mu_1$, $\mu_2$, $\mu_3$ des Spaltenvektors $\underline{\mu}$ so sind, dass $\mu_1 \in [- 0, 2; 0, 1]$, $\mu_2 \in [0, 3; 0, 7]$ und $\mu_3 \in [- 0, 05; 0, 4]$ ist, und die drei diagonalen Komponenten $\Sigma_1$, $\Sigma_2$, $\Sigma_3$ der diagonalen Matrix $\Sigma$ derart sind, dass $\Sigma_1 \in [0, 2; 0, 4]$, $\Sigma_2 \in [0, 1; 0, 5]$ und $\Sigma_3 \in [0, 2; 0, 8]$ ist.

12. System nach einem der Ansprüche 7 bis 11, wobei die Wahrscheinlichkeiten P des versteckten Markov- Modells zum Umschalten zwischen zwei Zuständen, die jeweils eine Schwimmart repräsentieren, derart sind, dass:

*P (Zustand$_i$, Zustand)* $\in [0, 8; 0, 9999]$, wobei i sich von j unterscheidet; und
*P (Zustand$_i$, Zustand)* $\in [0, 0001 ; 0, 2]$, wobei i gleich j ist.

13. System nach einem der Ansprüche 7 bis 12, wobei die Analysemittel (AN) innerhalb oder außerhalb des Gehäuses (BET) sind und der dreiachsige Beschleunigungsmesser (AT) verdrahtete oder drahtlose Übertragungsmittel zum Übertragen seiner Messwerte zu den Analysemitteln (AN) umfasst.

14. System nach einem der Ansprüche 7 bis 13, das ferner Anzeigemittel (AFFB) umfasst, die an dem Gehäuse und/ oder an Fernanzeigemitteln (AFFD) befestigt sind.

15. Verfahren zum Beobachten der Schwimmaktivität einer Person auf der Basis von Messungen, die von einem Bewegungssensor (CM) übertragen werden, der geschlossen an einem Teil eines Körpers eines Benutzers befestigt ist, **dadurch gekennzeichnet, dass** die Signale, die von dem Bewegungssensor (CM) zu wenigstens einer Messachse übertragen werden, analysiert werden, um die Schwimmart des Benutzers in Abhängigkeit von der Zeit anhand eines versteckten Markov-Modells mit N Zuständen zu bestimmen, die jeweils N Schwimmarten entsprechen.

**Claims**

1. A system for observing the swimming activity of a person, comprising a sealed unit (BET) that comprises a motion sensor (CM) and is provided with fixing means (BEL) for securely attaching said unit (BET) to a part of the body of a user, **characterised in that** it comprises means (AN) for analysing signals transmitted by said motion sensor (CM) to at least one measurement axis, which means are designed to determine the swimming style of said user as a function of time by using a hidden Markov model with N states that respectively correspond to N swimming styles.

2. The system according to claim 1, wherein said motion sensor (CM) comprises an accelerometer or a gyrometer or a magnetometer.

3. The system according to claim 1 or 2, further comprising a low-pass filter (FPB) with a cut-off frequency between 0.5Hz and 5Hz.

4. The system according to any one of claims 1 to 3, wherein said fixing means (BEL) are designed to securely attach said unit (BET) to the wrist, the ankle, the neck or the head of said user.

5. The system according to claim 3 or 4, wherein the probability density $p_x(\underline{x}(n))$ of correspondence between the signals delivered by said motion sensor (CM) and a state of said hidden Markov model that represents a swimming style is defined by the following expression:

$$\frac{1}{\sqrt{2\pi|\Sigma|}} \cdot e^{\frac{(x(n)-\mu)^T \Sigma^{-1}(x(n)-\mu)}{2}}$$

wherein:

$\underline{x}(n)$ represents the column vector of components of the axial measurements of said motion sensor (CM) at a sample of index n;

$\underline{\mu}$ represents a column vector with a number of components, which corresponds to the number of measurement axes of said motion sensor (CM) and that represents the state of said hidden Markov model that corresponds to said swimming style; and

$|\Sigma|$ represents the absolute value of the determinant of a diagonal matrix $\Sigma$, with a dimension that corresponds to the number of measurement axes of said motion sensor (CM) that represent the state of said hidden Markov model that corresponds to said swimming style.

6.  The system according to any one of the preceding claims, wherein said analysis means (AN) are designed to determine the swimming style of said user from a set of at least two types of swimming styles from among breaststroke, front crawl, butterfly and back crawl.

7.  The system according to any one of claims 1 to 6, wherein, with said motion sensor (CM) comprising a triaxial accelerometer (AT) and said sealed unit (BET) being securely attached to a wrist of said user, the three axes of said accelerometer (AT) that form a direct oriented trihedral are such that:

- the direction of the first axis is the longitudinal axis of the forearm of the wrist to which said unit (BET) is attached and is oriented toward the elbow; and

- the third axis is vertically oriented downwards when the forearm of the wrist to which said unit (BET) is attached is in a horizontal plane, the palm of the hand of the wrist to which said unit (BET) is attached being directed downwards and said unit (BET) being disposed on the external face of the wrist.

8.  The system according to claim 7, wherein, for breast stroke, the three components $\mu_1$, $\mu_2$, $\mu_3$ of the column vector $\underline{\mu}$ are such that $\mu_1 \in [-0.45;-0.20]$, $\mu_2 \in [-0.1 ; 0.5]$ and $\mu_3 \in [-0.8; 0.45]$, and the three diagonal components $\Sigma_1$, $\Sigma_2$, $\Sigma_3$ of the diagonal matrix $\Sigma$ are such that $\Sigma_1 \in [0.1; 0.18]$, $\Sigma_2 \in [0.2; 0.6]$ and $\Sigma_3 \in [0.03; 0.2]$ .

9.  The system according to claim 7, wherein, for front crawl, the three components $\mu_1$, $\mu_2$, $\mu_3$ of the column vector $\underline{\mu}$ are such that $\mu_1 \in [-0.7;-0.8]$, $\mu_2 \in [-0.25;-0.45]$ and $\mu_3 \in [-0.4; 0.2]$, and the three diagonal components $\Sigma_1$, $E_2$, $\Sigma_3$ of the diagonal matrix $\Sigma$ are such that $\Sigma_1 \in [0.2; 0.3]$, $\Sigma_2 \in [0.1; 0.3]$ and $\Sigma_3 \in [0.07; 0.5]$ .

10. The system according to claim 7, wherein, for butterfly, the three components $\mu_1$, $\mu_2$, $\mu_3$ of the column vector $\underline{\mu}$ are such that $\mu_1 \in [-0.8; 0.1]$, $\mu_2 \in [-0.45; 0.5]$ and $\mu_3 \in [-0.2; 0.4]$, and the three diagonal components $\Sigma_1$, $\Sigma_2$, $\Sigma_3$ of the diagonal matrix $\in$ are such that $\Sigma_1 \in [0.2; 0.4]$, $\Sigma_2 \in [0.1; 0.5]$ and $\Sigma_3 \in [0.2; 0.8]$ .

11. The system according to claim 7, wherein, for back crawl, the three components $\mu_1$, $\mu_2$, $\mu_3$ of the column vector $\underline{\mu}$ are such that $\mu_1 \in [-0.2; 0.1]$ , $\mu_2 \in [0.3; 0.7]$ and $\mu_3 \in [-0.05; 0.4]$, and the three diagonal components $\Sigma_1$, $E_2$, $\Sigma_3$ of the diagonal matrix $\Sigma$ are such that $\Sigma_1 \in [0.2; 0.4]$, $\Sigma_2 \in [0.1; 0.5]$ and $\Sigma_3 \in [0.2; 0.8]$ .

12. The system according to any one of claims 7 to 11, wherein the probabilities P of said hidden Markov model for switching between two states that respectively represent one swimming style are such that:

$P (state_i, state)$ $\in [0.8; 0.9999]$, where i is different from j; and

$P (state_i, state)$ $\in [0.0001; 0.2]$, where i is equal to j.

13. The system according to any one of claims 7 to 12, wherein said analysis means (AN) are inside or outside of said unit (BET) and said triaxial accelerometer (AT) comprises wired or wireless transmission means for transmitting its measurements to said analysis means (AN).

14. The system according to any one of claims 7 to 13, further comprising display means (AFFB) that are fixed to said unit and/or remote display means (AFFD).

15. A method for observing the swimming activity of a person on the basis of measurements that are transmitted by a motion sensor (CM) that is fixed in a sealed manner to a part of the body of a user, **characterised in that** the signals that are transmitted by said motion sensor (CM) to at least one measurement axis are analysed so as to determine the swimming style of said user as a function of time by using a hidden Markov model with N states that respectively correspond to N swimming styles.

BEL

BET
AT
AN

AFFB

FPB

FIG.1

BEL

BET
AT
FPB

AFFB

AFFD

AN

OP

FIG.2

état

(dos crawlé) 3

2.5

(crawl) 2

1.5

(brasse) 1

0      20   30   40      60 63   80      100 103   120      temps(s)

Signal AT

1

0.5

0

-0.5

-1

-1.5

0      20      40      60      80      100      120      temps(s)

$x_1$

$x_2$

$x_3$

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004038336 A

- US A4654010 A

**Littérature non-brevet citée dans la description**

- **L.R. RABINER ; B.H. JUANG.** An introduction to hidden Markov models. *IEEE ASSP Magazine,* Janvier 1986

- Inference in Hidden Markov Models. **CAPPÉ, MOULINES ; RYDEN.** Springer series in statisctics. Springer